(19) **Europäisches Patentamt / European Patent Office / Office européen des brevets**

(11) **EP 2 820 985 B1**

(12) **EUROPEAN PATENT SPECIFICATION**

(45) Date of publication and mention
of the grant of the patent:
**17.10.2018   Bulletin 2018/42**

(51) Int Cl.:
**A47J 37/07** *(2006.01)*

(21) Application number: **13174494.8**

(22) Date of filing: **01.07.2013**

(54) **Barbecue grill**

Griller

Grill de barbecue

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.01.2015   Bulletin 2015/02**

(73) Proprietor: **Electrolux Appliances Aktiebolag
105 45 Stockholm (SE)**

(72) Inventors:
• **Tuzzi, Omero
  I-33080 Porcia (PN) (IT)**

• **Cenedese, Claudio
  I-33080 Porcia (PN) (IT)**
• **Dorigo, Roberto
  33080 Porcia (PN) (IT)**

(74) Representative: **Electrolux Group Patents
AB Electrolux
Group Patents
105 45 Stockholm (SE)**

(56) References cited:
**EP-A1- 2 329 751        FR-A1- 2 908 263
US-A1- 2005 258 170**

EP 2 820 985 B1

**Description**

The present invention generally relates to the field of cooking appliances. More specifically, the present invention relates to barbecue grill appliances, hereinafter simply referred to as "barbecue grills".

Many known types of barbecue grills are available in the market, both for outdoor and indoor uses. Known barbecue grills typically have one or more heating elements and one or more cooking surfaces. The cooking surface is typically grill-shaped, for example comprising parallel metal bars or a porcelain-covered metal gridiron. The heating elements are typically located under the cooking surface, so as to allow food placed on the cooking surface to be cooked by providing heat directly from below. Such heating elements are designed to generate, when fed with a fuel or a source of energy and properly operated, intense heat, usually up to temperatures of 260°C or more. Known heating elements may comprise supports for charcoal, gas burners, or electric heaters.

Known barbecue grills are affected by several drawbacks.

First of all, irrespective of the heating elements type, the cooking process is quite slow. This drawback is further exacerbated if the amount of food to be prepared cannot be cooked all at once, such as when a great number of guests have to be served. In this case, different portions of the whole amount of food have to be cooked in different sequential cooking steps; if each cooking step lasts too much, the food portions cooked earlier may excessively cool down.

Moreover, the cooking quality offered by known barbecue grills is not always satisfactory when large pieces of food (such as turkeys or big fishes) have to be cooked.

EP 2329751 discloses a cooking appliance. The cooking appliance comprises a lower casing structured for resting on a generic working table, a lower food-contacting heating plate which is positioned on the top of the lower casing in a substantially horizontal position and is structured for directly supporting the food products to be cooked, and an upper bell-shaped body which is movably mounted on the lower casing so as to be movable to and from a closed position in which the bell-shaped body rests on the top of the lower casing and defines, together with the lower casing, a closed cavity containing the lower heating plate. The cooking appliance is also provided with an upper food-contacting heating plate which is located inside the bell-shaped body so as to be positioned, when the bell-shaped body is in the closed position, over the lower heating plate substantially parallel to the latter. The upper food-contacting heating plate is also connected to the bell-shaped body via a connecting assembly structured so as to allow the upper heating plate to move freely inside the bell-shaped body in a direction substantially perpendicular to the reference laying plane of the upper heating plate. The cooking appliance also comprises a heating-plate locking device which is able, on command, to selectively impair any movement of the upper heating plate in said moving direction; and a control unit which controls the heating-plate locking device so as to activate said heating-plate locking device for impairing any movement of the upper heating plate in said moving direction, after a given lapse of time from the starting of the cooking cycle.

In view of the state of the art outlined in the above, Applicant has handled the problem of how to speed up the cooking process of, and improve the cooking quality offered by, barbecue grills.

Applicant has found that by feeding electromagnetic radiation in the microwave spectrum into the cooking compartment of a barbecue grill, the combination of heat produced by the heating elements of the barbecue grill and heat produced by such electromagnetic radiation allows to efficiently cook food in a fast way. Thanks to the action of the electromagnetic radiation in the microwave spectrum, which is able to deeply penetrate into the food to be cooked, it is possible to evenly heat also large piece of food, improving the cooking quality.

One aspect of the present invention proposes a barbecue grill as defined in claim 1, comprising a cooking compartment, a cooking surface located in the cooking compartment, and at least one heating element located under the cooking surface and adapted to be operated to provide heat for cooking food placed on the coking surface. The barbecue grill further comprises at least one additional heating element adapted to generate electromagnetic radiation in the microwave spectrum and feed said electromagnetic radiation into the cooking compartment for investing food placed on the coking surface.

Preferably, the at least one heating element is adapted to generate heat from a solid fuel, a gas fuel or an electric current.

According to the present invention, the at least one additional heating element comprises at least one microwave radiation generator to generate the electromagnetic radiation and at least one corresponding waveguide coupling the radiation generator to a corresponding opening provided on a cooking compartment surface to guide the electromagnetic radiation into the cooking compartment through the waveguide and the opening.

According to the present invention, the barbecue grill further comprises a barbecue control unit configured to drive the at least one microwave radiation generator as a function of food parameters provided by a user.

According to an advantageous embodiment the present invention, the barbecue control unit is configured to control a duty cycle of the at least one microwave radiation generator as a function of the food parameters provided by a user.

Advantageously, said barbecue control unit is configured to set cooking parameters based on the food parameters provided by a user of the barbecue grill, and drive the at least one microwave radiation generator based on the cooking parameters.

According to an embodiment of the present invention the barbecue control unit is adapted to drive also the heating element based on the cooking parameters.

According to the present invention, said food parameters comprise a food type parameter whose value identifies the type of food to be cooked, and the barbecue control unit further comprises a database module storing for each food type parameter value a corresponding set of cooking parameters.

According to the present invention, said set of cooking parameters corresponding to a food type parameter value comprises:

- a base cooking time parameter, whose value determines a base cooking time required to cook the food identified by the food parameter value;
- an average power level parameter, whose value determines the average power level of the microwave radiation generated by the microwave radiation generators during the cooking of the food identified by the food parameter value, and
- an internal barbecue grill temperature parameter whose value determines the temperature of the cooking compartment required to cook the food identified by the food parameter value.

Preferably, said set of cooking parameters corresponding to a food type parameter value further comprises a unitary cooking time parameter, whose value determines an additional cooking time to be added to the base cooking time based on the weight of the food to be cooked;

According to an embodiment of the present invention, said set of cooking parameters corresponding to a food type parameter value further comprises a starting power level parameter, whose value determines the power level of the microwave radiation generated by the microwave radiation generators at the beginning of the cooking of the food identified by the food parameter value.

According to an advantageous embodiment of the present invention, said food parameters further comprise a total food weight parameter, whose value corresponds to the total weight of the food to be cooked. Said total food weight parameter is advantageously exploited by the barbecue control unit to calculate a total cooking time parameter together with the base cooking time parameter and the unitary cooking time parameter, the barbecue control unit being configured to activate the heating elements and the additional heating elements for a time period corresponding to the total cooking time parameter value.

According to an embodiment of the present invention, the barbecue control unit is configured to calculate the total cooking time parameter by multiplying the unitary cooking time parameter value by the total food weight parameter value, and then by adding the base cooking time parameter to the result of said multiplication.

Preferably, the barbecue control unit is further configured to:

- drive the at least one heating element so as to bring the cooking compartment temperature to a value corresponding to the internal barbecue grill temperature parameter value, and
- set the power level of the microwave radiation generated by the microwave radiation generators based on the average power level parameter and the starting power level parameter.

Advantageously, the barbecue grill further comprises a grill housing, the grill housing comprising a lower grill housing and a grill hood hingedly connected to the lower grill housing. The cooking compartment is delimited by lateral walls of the lower grill housing and by the grill hood when in a closed position. The openings are preferably provided on at least a lateral wall.

Preferably, the grill hood and the lateral walls are made of metallic material or comprise a covering made of metallic material.

Preferably, the barbecue grill further comprises a metallic wire mesh located in the cooking compartment between the cooking surface and the at least one heating element.

The cooking surface may advantageously comprise a corrugated gridiron provided with alternate crests and troughs.

Alternatively, the cooking surface may comprise a grid having parallel metal bars.

These, and others, features and advantages of the solution according to the present invention will be better understood by reading the following detailed description of some embodiments thereof, provided merely by way of exemplary and non-limitative examples, to be read in conjunction with the attached drawings, wherein:

Figure 1 is a sectional view of a barbecue grill in which embodiments of the present invention may be implemented;
Figure 2 illustrates in terms of functional modules a grill barbecue control unit of the barbecue grill of Figure 1 according to an embodiment of the present invention, and

**Figures 3A-3C** are three power modulation profiles of microwave radiation generators of the barbecue grill of **Figure 1** according to an embodiment of the present invention.

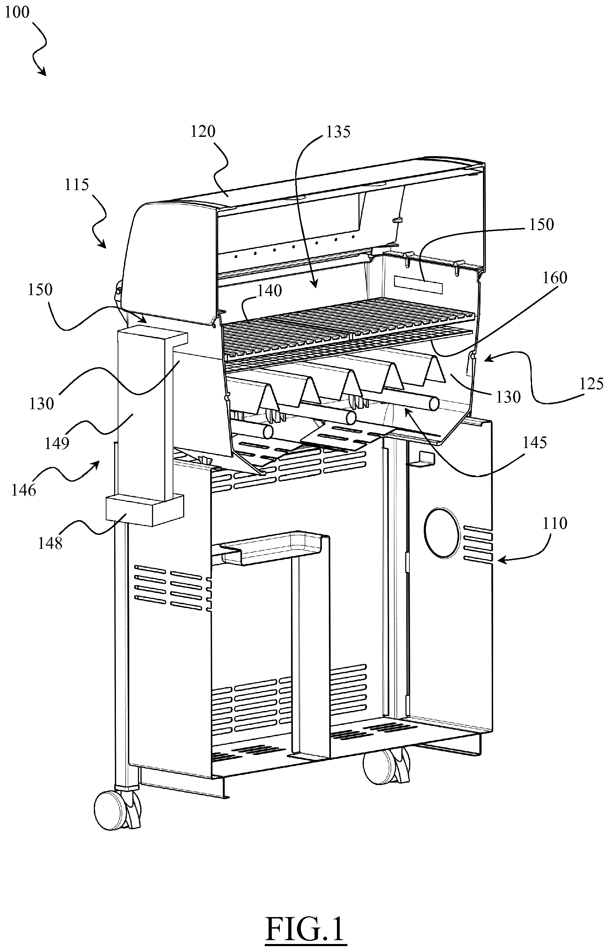

With reference to the drawings, **Figure 1** is a sectional view of a barbecue grill **100** in which embodiments of the present invention may be implemented.

The barbecue grill **100** depicted in **Figure 1** is a gas barbecue grill, wherein heat is generated by one or more heating elements **145**.

The barbecue grill **100** comprises a stand **110** supporting a grill housing **115**. In the exemplary and not limitative barbecue grill **100** illustrated in figure, the stand **110** is a cabinet adapted to house a gas source (not illustrated), such as a gas cylinder, adapted to provide gas to a plurality of gas burners, schematically depicted in figure as tubular elements, defining the heating elements **145**. For example, the gas cylinder may store liquid propane. Similar considerations apply in case the barbecue grill **100** is structured in a different way, for example with the grill housing **115** and the stand **110** that form a single body, or with the grill housing **115** and/or the stand **110** that are shaped in a different way.

The grill housing **115** comprises a grill hood **120** and a lower grill housing **125**. The grill hood **120** is hingedly connected to the lower grill housing **125** for opening and closing of the barbecue grill **100** during operation. The lower grill housing **125** comprises lateral walls **130** laterally delimiting a cooking compartment **135**; when the grill hood **120** is closed, it delimits the cooking compartment **135** from above. Hereinafter, with the term "cooking compartment", it will be intended both the space itself wherein the food is cooked, as well as the structure defining such space (*i.e.,* the lateral walls **130** and the grill hood **120**).

A cooking surface **140** is held within the cooking compartment **135,** for example supported by shelf elements located at lateral walls **130** of the cooking compartment **135**. In the embodiment at issue, the cooking surface **140** comprises a corrugated gridiron provided with alternate crests and troughs. Similar considerations apply in case the cooking surface **140** is structured in a different way, such as comprising a grid having parallel metal bars.

The heating elements **145** may be located in the lower grill housing **125** under the cooking surface **140,** and are adapted to provide heat for cooking food placed on the cooking surface **140**. In the example considered, the heating elements **145** comprise three gas burners. The gas burners are supplied with gas coming from the gas source through a hose and valve regulators (not illustrated). The valve regulators are controllable by knobs (not illustrated) allowing to set the amount of gas to be fed to the gas burners.

Naturally, similar considerations apply if the number of gas burners is different, or if the heating elements **145** are of a different type, for example comprising a support - such as a grate or a tray - for white-hot charcoal, or electric heaters. For example, for a cooking surface **140** having a size of 65x50 cm, the power supplied by the heating elements **145** should preferably be equal to at least 12 KW.

In operation, when the grill hood **120** is in an opened configuration, the cooking compartment **135** is accessible, and food may be placed on / taken from the cooking surface **140;** when instead the grill hood **120** is in a closed configuration, the cooking compartment **135** is not accessible from the outside, so as to trap the heated air for increasing the internal temperature.

According to an embodiment of the present invention, the cooking speed of the grill barbecue **100** is speeded up and the cooking quality thereof is improved by combining the heat generated by the heating elements **145** with heat generated by means of microwave radiations.

For this purpose, according to an embodiment of the present invention, the grill barbecue **100** comprises one or more additional heating elements **146** adapted to generate electromagnetic radiation in the microwave spectrum - preferably around a frequency of 2,45 GHz - and provide them within the cooking compartment **135**. According to an embodiment of the present invention, the additional heating elements **146** comprise at least one microwave radiation generator **148,** such as a magnetron capable of irradiating microwave radiations with a power of about 1-2 KW. The actual power level of the microwave radiations is set by modulating the power irradiated by the microwave radiation generators **148** according to a Pulse Width Modulation (PWM) scheme, *i.e.,* by alternatively turning on and off the microwave radiation generators **148** with a variable duty cycle (the duty cycle being the ratio of the duration of the "on" state to the total period of the signal). The higher the duty cycle, the higher the power level of the microwave radiations. Similar considerations apply if the additional heating elements comprise different microwave radiation generators, such as for example solid-state microwave radiation generators. Regarding the period (or control system time base) of the duty cycle, it has been found that an optimal value to drive the microwave radiation generators is about 15 s.

According to an embodiment of the present invention, the microwave radiation generators **148** are located on the stand **110**. The microwave radiation generated by the microwave radiation generators **148** is fed to the cooking compartment **135** through waveguides **149,** *e.g.,* made of aluminum, which are coupled to openings **150** provided on at least one lateral wall **130** of the lower grill housing **125**. In the example at issue, two openings **150** are provided, located on opposite lateral walls **130** of the lower grill housing **125** above the cooking surface **140** in such a way to allow the microwave radiation generated by the microwave radiation generators **148** to propagate in the portion of the cooking compartment **135** located between the grill hood **120** and the cooking surface **140,** and to reflect on the lateral walls **130** of the lower grill housing **125** as well as on the walls of the grill hood **120,** so as to invest food placed on the cooking surface **140**. On this regard, according to an embodiment of the present invention, the grill hood **120** as well as the lateral walls **130** are made of - or comprise coverings or gaskets made of - metallic material, in order to avoid that microwave radiation exits from the grill barbecue **100**.

In order to avoid that microwave radiations dangerously mix with gas, a metallic wire mesh **160** may be optionally placed in the cooking compartment **135** between the cooking surface **140** and the heating elements **145**. The presence of the metallic wire mesh **160** in combination with the metallic walls (or the metallic coverings) of the grill hood **120** and with the metallic (or the metallic coverings of the) lateral walls **130** of the lower grill housing **125** defines a closed cooking volume adapted to trap the microwave radiation inside therein.

According to an embodiment of the present invention, the grill barbecue **100** comprises a grill barbecue control unit adapted to efficiently set cooking parameters - such as the cooking time, the power irradiated by the microwave radiation generators, and the temperature of the cooking compartment - for optimizing the cooking operations performed by the grill barbecue **100** based on food parameters input by the user - such as the specific type and amount of food to be cooked, as well as the desired degree of cooking. For example, the grill barbecue control unit may be located on a circuit board (not illustrated) located in the barbecue grill **100,** such as in the grill housing **115** or in the stand **110**.

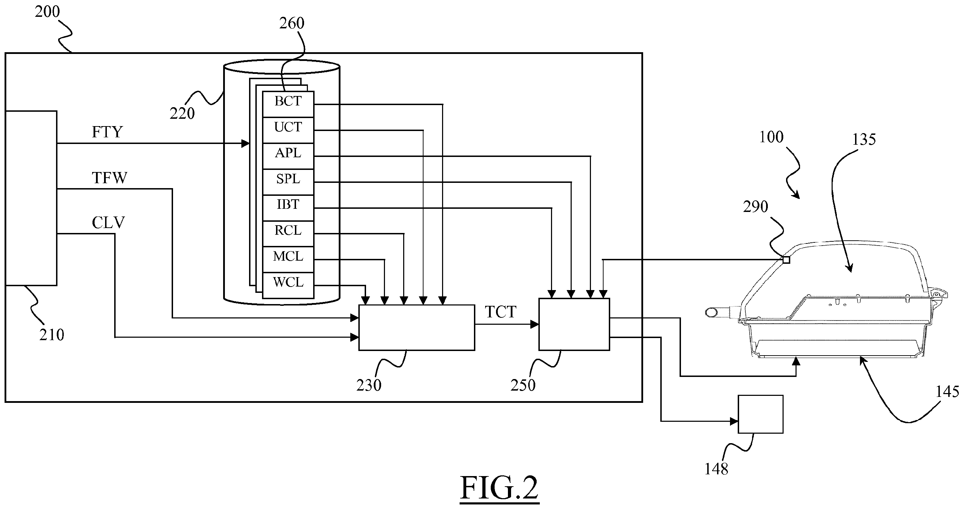

A grill barbecue control unit **200** according to an embodiment of the present invention is illustrated in **Figure 2** in terms of functional modules.

The grill barbecue control unit **200** comprises an input interface module **210,** a database module **220,** a cooking time module **230,** and a driver module **250**.

According to an embodiment of the present invention, the input interface module **210** is adapted to be used by users of the barbecue grill **100** for inputting food parameters describing the food to be cooked by the barbecue grill **100** and the desired way such food has to be cooked. According to an embodiment of the present invention, said food parameters comprise:

- A food-type parameter **FTY** that specifies the type of food to be cooked. The parameter FTY may assume a plurality of values *FTY,* each one corresponding to a specific type of food, such as: chicken breast, turkey, steak, pork chop, bass, salmon, and so on.
- A total food-weight parameter **TFW,** whose value *TFW* corresponds to the total weight (for example, in terms of kg) of the food to be cooked.
- A cooking level parameter **CLV** that specifies the desired degree of cooking. The cooking level parameter **CLV** may assume a plurality of values *CLV,* each one corresponding to a specific degree of cooking, such as: rare, medium, well done, and so on.

According to an embodiment of the present invention, the input interface module **210** includes knobs, for example a knob per each food parameter. Each knob is capable of being rotated among positions each one corresponding to a specific value of the corresponding food parameter. Different types of input interface module **210** are also contemplated, such as including keyboards, sliders, buttons, touch screens and so on.

According to an embodiment of the present invention, the database module **220** stores for each value *FTY* the parameter **FTY** may assume a corresponding cooking parameter table **260** listing a set of cooking parameters for the cooking of the food type identified by such value *FTY.* According to an embodiment of the present invention, the set of cooking parameters includes:

- A base cooking time parameter **BCT,** whose value *BCT* represents a base cooking time required to cook the food identified by the parameter **FTY**. For example, the value *BCT* of the base cooking time parameter **BCT** may be expressed in terms of minutes.
- A unitary cooking time parameter **UCT,** whose value *UCT* represents an additional cooking time to be added to the base cooking time based on the weight of the food to be cooked. For example, the value *UCT* may be expressed in terms of minutes per each Kg of the food identified by the parameter **FTY.**
- An average power level parameter **APL,** whose value *APL* represents the average power level of the microwave radiation generated by the microwave radiation generators **148** during the cooking of the food identified by the parameter **FTY**. For example, the value *APL* may be expressed in terms of duty cycle percentage.
- A starting power level parameter **SPL,** whose value *SPL* represents the power level of the microwave radiation generated by the microwave radiation generators **148** at the beginning of the cooking of the food identified by the parameter **FTY**. For example, the value *SPL* may be expressed in terms of duty cycle percentage.
- An internal barbecue grill temperature parameter **IBT,** whose value *IBT* represents the temperature of the cooking compartment **135** required to cook the food identified by the parameter **FTY**. For example, the value *IBT* may be expressed in terms of degrees Celsius.
- A rare cooking level parameter **RCL,** whose value *RCL* reflects how the cooking time required to cooking the food identified by the parameter **FTY** has to be modified in order to obtain a rare degree of cooking. For example, the value *RCL* may be a dimensionless multiplicative parameter.

- A medium cooking level parameter **MCL,** whose value *MCL* reflects how the cooking time required to cooking the food identified by the parameter **FTY** has to be modified in order to obtain a medium degree of cooking. For example, the value *MCL* may be a dimensionless multiplicative parameter.
- A well done cooking level parameter **WCL,** whose value *WCL* reflects how the cooking time required to cooking the food identified by the parameter **FTY** has to be modified in order to obtain a well done degree of cooking. For example, the value *WCL* may be a dimensionless multiplicative parameter.

According to an embodiment of the present invention, the cooking parameter values stored in the cooking parameter tables **260** have been calculated based on physical-chemical characteristics of the food types listed therein.

Three exemplary cooking parameter tables **260** according to an embodiment of the present invention are illustrated hereinbelow:

| FTY | BCT (min) | UCT (min/kg) | APL (%) | SPL (%) | IBT (°C) | RCL | MCL | WCL |
|---|---|---|---|---|---|---|---|---|
| Beef tenderloin whole | 5 | 2 | 70 | 80 | 200 | 0.95 | 1 | 1.05 |
| Pork chops | 5.3 | 1.74 | 75 | 75 | 210 | 0.94 | 1 | 1.07 |
| Frozen beef hamburgers | 2.8 | 1.5 | 100 | 100 | 220 | 0.92 | 1 | 1.07 |

According to an embodiment of the present invention, the cooking time module **230** is configured to calculate a total cooking time parameter **TCT** whose value *TCT* represents the total duration, *e.g.*, in terms of minutes, of the operations for cooking the amount identified by the parameter **TFW** of the food identified by the parameter **FTY** with the degree of cooking identified by the parameter **CLV** input by the user through the input interface module **210.**

According to an embodiment of the present invention, the cooking time module **230** calculates the value *TCT* of the parameter **TCT** according to the following formulas:

- if *CLV = rare* → *TCT = (BCT + UCT * TFW) * RCL;*
- if *CLV = medium* → *TCT = (BCT + UCT * TFW) * MCL;*
- if *CLV = well done* → *TCT = (BCT + UCT * TFW) * WCL;*

wherein *BCT, UCT, RCL, MCL, WCL* are the values of the cooking parameters **BCT, UCT, RCL, MCL, WCL,** respectively, listed in the cooking parameter table **260** corresponding to the food type identified by the value *FTY* of the parameter **FTY** input by the user, and *TFW, CLV* are the values of the parameters **TFW** and **CLV** input by the user.

For example, making reference to the exemplary cooking parameter table **260** listed above, the value *TCT* of the total cooking time parameter **TCT** calculated by the cooking time module **230** for 1.9 kg of beef tenderloin with a well done degree of cooking is equal to:

$$TCT = (5 + 2 * 1.9) * 1.05 = 9.24 \text{ minutes}$$

According to an embodiment of the present invention, the driver module **250** is configured to receive the parameter **TCT** calculated by the cooking time module **230** and the cooking parameters **APL, SPL** listed in the cooking parameter table **260** corresponding to the food type identified by the value *FTY* of the parameter **FTY** input by the user, and to accordingly drive the microwave radiation generators **148** of the barbecue grill **100.**

According to an embodiment of the present invention, the driver module **250** activates the microwave radiation generators **148** of the barbecue grill **100** for a time period corresponding to (*e.g.,* equal to) the value *TCT* of the received parameter **TCT,** setting the power level of the microwave radiation generators **148** based on the received cooking parameters **APL, SPL.**

According to an embodiment of the present invention, the driver module **250** is configured to set the power level of the microwave radiation generators **148** in the following way:

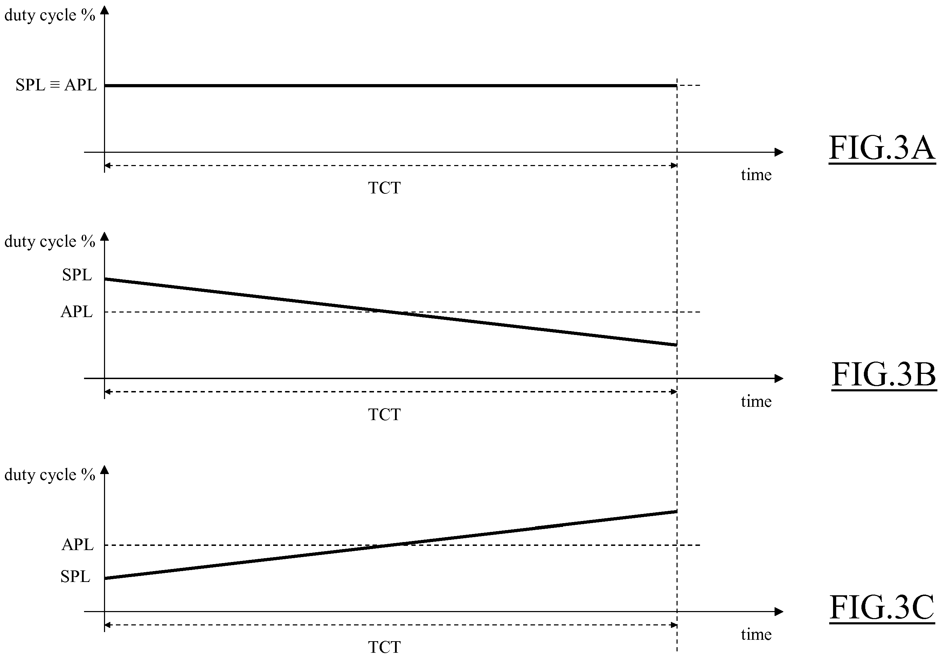

1) If the value *APL* of the average power level parameter **APL** and the value *SPL* of the starting power level parameter **SPL** are equal, the power irradiated by the microwave radiation generators **148** is modulated with a duty cycle percentage equal to *APL* for the duration of the cooking operations (which are determined by the total cooking time parameter **TCT**). An example of this power modulation profile is illustrated in **Figure 3A.**

2) If the value *APL* of the average power level parameter **APL** is lower than the value *SPL* of the starting power level parameter **SPL,** the power irradiated by the microwave radiation generators **148** is modulated with a duty cycle percentage starting from the value *SPL* and linearly decreasing, for the entire duration of the cooking operations, with a slope that guarantees the same total energy that would have been provided by modulating the irradiated power for the entire duration of the cooking operations with a constant duty cycle percentage equal to the value *APL.* An example of this power modulation profile is illustrated in **Figure 3B.**

3) If the value *APL* of the average power level parameter **APL** is higher than the value *SPL* of the starting power level parameter **SPL,** the power irradiated by the microwave radiation generators **148** is modulated with a duty cycle percentage starting from the value *SPL* and linearly increasing, for the entire duration of the cooking operations, with a slope that guarantees the same total energy that would have been provided by modulating the irradiated power for the entire duration of the cooking operations with a constant duty cycle percentage equal to the value *APL.* An example of this power modulation profile is illustrated in **Figure 3C.**

According to an embodiment of the present invention, the driver module **250** is further configured to receive - together with the parameters **TCT, APL** and **SPL** - also the cooking parameter **IBT** listed in the cooking parameter table **260** corresponding to the food type identified by the value *FTY* of the parameter **FTY** input by the user, and to accordingly drive the heating elements **145** of the barbecue grill **100.** According to this embodiment of the invention, the driver module **250** activates the heating elements **145** for a time period corresponding to (*e.g.,* equal to) the value *TCT* of the received parameter **TCT,** driving the heating elements **145** to bring the temperature of the cooking compartment **135** of the barbecue grill **100** to a value corresponding to the value *IBT* of the received internal barbecue grill temperature parameter **IBT.** This embodiment of the invention is particularly suited for barbecue grills **100** provided with heating elements **145** that are adapted to be automatically controlled, such as for example electric heaters or gas burners fed by means of valve regulators including controllable solenoid valves. According to this embodiment of the invention, in order to allow the temperature of the cooking compartment **135** to be brought, and maintained, to the value *IBT* of the received internal barbecue grill temperature parameter **IBT** during the cooking operations, the cooking compartment **135** may be advantageously provided with a temperature sensor **290,** such as a thermocouple or a thermistor, coupled to the driver module **250** so as to establish a feedback control loop.

If the heating elements **145** are not adapted to be controlled in an automatic way, such as for example in case of a support for white-hot charcoal or gas burners with valve regulators controllable by knobs, instead of directly driving the heating elements **145,** the driver module **250** may be configured to display the value *IBT* of the internal barbecue grill temperature parameter **IBT** and/or the value *TCT* of the total cooking time parameter **TCT** (for example through a proper display unit, not illustrated in figure), in such a way to allow the user to manually control the heating elements **145** according to said displayed parameter values.

The proposed solution allows to cook food faster than in the known solutions. The Applicant has found that the time required to cook food with the proposed barbecue grill is about 80%-50% of the time required to cook the same food by employing a traditional barbecue grill. Moreover, the proposed barbecue grill is also suited to efficiently cook also large pieces of food.

Naturally, in order to satisfy local and specific requirements, a person skilled in the art may apply to the solution described above many logical and/or physical modifications and alterations.

For example, although in the present description reference has been made to a grill barbecue control unit comprising four distinct modules, *i.e.,* the input interface module, the database module, the cooking time module, and the driver module, some of such modules may be part of a same macro-module. The modules may be implemented by means of electronic units located on the circuit board, and/or may be implemented in form of firmware or software instructions running on corresponding processing units.

Moreover, similar considerations apply if the grill barbecue control unit is configured to carry out a less fine cooking optimization, with only a subset of the cooking parameters stored in the described cooking parameter tables that are exploited for optimizing the cooking operations, such as for example by neglecting the parameters regarding the degree of cooking or by considering only the base cooking parameter, the average power parameter, and the internal barbecue grill temperature parameter.

According to another possible embodiment, the driver module **250** can be configured to drive only the microwave radiation generators **148** based on cooking parameters. In particular, it can be designed only to set the power level of the microwave radiation generator **148** based on the above mentioned cooking parameters **APL** and **SPL,** with no control on the other heating elements.

**Claims**

1.  A barbecue grill (**100**) comprising:

- a cooking compartment (**135**);
- a cooking surface (**140**) located in the cooking compartment;
- at least one heating element (**145**) located under the cooking surface and adapted to be operated to provide heat for cooking food placed on the coking surface,

wherein:

- the barbecue grill further comprises at least one additional heating element (**146**) adapted to generate electromagnetic radiation in the microwave spectrum and feed said electromagnetic radiation into the cooking compartment for investing food placed on the coking surface;
- the at least one additional heating element (**146**) comprises at least one microwave radiation generator (**148**) to generate the electromagnetic radiation and at least one corresponding waveguide (**149**) coupling the radiation generator to a corresponding opening (**150**) provided on a cooking compartment (**135**) surface to guide the electromagnetic radiation into the cooking compartment (**135**) through the waveguide and the opening (**150**);
- the barbecue grill further comprises a barbecue control unit (**200**) configured to drive the at least one microwave radiation generator (**148**) as a function of food parameters (**FTY, TFW, CLV**) provided by a user, said food parameters comprise a food type parameter (**FTY**) whose value identifies the type of food to be cooked, the barbecue control unit (**200**) further comprising a database module (**220**) storing for each food type parameter (**FTY**) value a corresponding set of cooking parameters;
**characterized in that**
- said set of cooking parameters corresponding to a food type parameter (**FTY**) value comprises:

- a base cooking time parameter (**BCT**), whose value determines a base cooking time required to cook the food identified by the food parameter (**FTY**) value;
- an average power level parameter (**APL**), whose value determines the average power level of the microwave radiation generated by the microwave radiation generators (**148**) during the cooking of the food identified by the food parameter (**FTY**) value, and
- an internal barbecue grill temperature parameter (**IBT**) whose value determines the temperature of the cooking compartment (**135**) required to cook the food identified by the food parameter (**FTY**) value.

2. The barbecue grill (**100**) of claim 1, wherein the at least one heating element (**145**) is adapted to generate heat from a solid fuel, a gas fuel or an electric current.

3. The barbecue grill (**100**) of any one among the preceding claims, wherein the barbecue control unit (**200**) is configured to control a duty cycle of the at least one microwave radiation generator (**148**) as a function of the food parameters (**FTY, TFW, CLV**) provided by a user.

4. The barbecue grill (**100**) of claim 3, wherein the barbecue control unit (**200**) is configured to:

- set cooking parameters (**BCT, UCT, APL, SPL, IBT, RCL, MCL, WCL, TCT**) based on the food parameters (**FTY, TFW, CLV**) provided by a user of the barbecue grill (**100**), and
- drive the at least one microwave radiation generator (**148**) based on the cooking parameters.

5. The barbecue grill (**100**) of claim 4, wherein the barbecue control unit (**200**) is adapted to drive also the heating element (**145**) based on the cooking parameters.

6. The barbecue grill (**100**) of any one among the preceding claims, wherein said set of cooking parameters corresponding to a food type parameter (**FTY**) value further comprises:

- a unitary cooking time parameter (**UCT**), whose value determines an additional cooking time to be added to the base cooking time based on the weight of the food to be cooked.

7. The barbecue grill (**100**) of any one among the preceding claims, wherein said set of cooking parameters corresponding to a food type parameter (**FTY**) value further comprises a starting power level parameter (**SPL**), whose value determines the power level of the microwave radiation generated by the microwave radiation generators (**148**) at the beginning of the cooking of the food identified by the food parameter (**FTY**) value.

8. The barbecue grill (**100**) of any one among claims 1 to 6, wherein said food parameters further comprise a total food weight parameter (**TFW**), whose value corresponds to the total weight of the food to be cooked, the barbecue control unit (**200**) being configured to:

- calculate a total cooking time parameter (**TCT**) based on the base cooking time parameter (**BCT**), the unitary cooking time parameter (**UCT**) and the total food weight parameter (**TFW**);
- activate the heating elements (**145**) and the additional heating elements (**146**) for a time period corresponding to the total cooking time parameter (**TCT**) value.

9. The barbecue grill (**100**) of claim 8, wherein the barbecue control unit (**200**) is configured to calculate the total cooking time parameter (**TCT**) by multiplying the unitary cooking time parameter (**UCT**) value by the total food weight parameter (**TFW**) value, and then by adding the base cooking time parameter (**BCT**) to the result of said multiplication.

10. The barbecue grill (**100**) of any one among the preceding claims, wherein the barbecue control unit (**200**) is further configured to:

- drive the at least one heating element (**145**) so as to bring the cooking compartment (**135**) temperature to a value corresponding to the internal barbecue grill temperature parameter (**IBT**) value, and
- set the power level of the microwave radiation generated by the microwave radiation generators (**148**) based on the average power level parameter (**APL**) and the starting power level parameter (**SPL**).

11. The barbecue grill (**100**) of any one among the preceding claims, further comprising a grill housing (**115**), the grill housing (**115**) comprising a lower grill housing (**125**) and a grill hood (**120**) hingedly connected to the lower grill housing (**125**), the cooking compartment (**135**) being delimited by lateral walls (**135**) of the lower grill housing (**125**) and by the grill hood (**120**) when in a closed position, wherein the openings (**150**) are provided on at least a lateral wall (**135**).

**Patentansprüche**

1. Grill (**100**), umfassend:

- einen Garraum (**135**);
- eine Garfläche (**140**), die im Garraum angeordnet ist;
- mindestens ein Heizelement (**145**), das unter der Garfläche angeordnet ist und dazu ausgelegt ist, bedient zu werden, um Hitze zum Garen von Nahrungsmitteln, die auf der Garfläche angeordnet sind, bereitzustellen,

wobei:

- der Grill ferner mindestens ein zusätzliches Heizelement (**146**) umfasst, das dazu ausgelegt ist, elektromagnetische Strahlung im Mikrowellenspektrum zu erzeugen und diese elektromagnetische Strahlung in den Garraum einzuspeisen, um Nahrungsmittel, die auf der Garfläche angeordnet sind, zu beaufschlagen;
- das mindestens eine zusätzliche Heizelement (**146**) mindestens einen Mikrowellenstrahlungsgenerator (**148**) zur Erzeugung der elektromagnetischen Strahlung und mindestens einen entsprechenden Wellenleiter (**149**) umfasst, der den Strahlungsgenerator mit einer entsprechenden, auf einer Oberfläche des Garraums (**135**) vorgesehenen Öffnung (**150**) koppelt, um die elektromagnetische Strahlung durch den Wellenleiter und die Öffnung (**150**) in den Garraum (**135**) zu leiten;
- der Grill ferner eine Grillsteuereinheit (**200**) umfasst, die zum Antreiben des mindestens einen Mikrowellenstrahlungsgenerators (**148**) in Abhängigkeit von Nahrungsmittel-Parametern (**FTY, TFW, CLV**), die von einem Benutzer bereitgestellt werden, ausgelegt ist, wobei die Nahrungsmittel-Parameter einen Parameter (**FTY**) in Bezug auf die Nahrungsmittelart umfasst, dessen Wert die Art des zu garenden Nahrungsmittels identifiziert, wobei die Grillsteuereinheit (**200**) ferner ein Datenbankmodul (**220**) umfasst, das für jeden Parameterwert (**FTY**) in Bezug auf die Nahrungsmittelart einen entsprechenden Satz von Garparametern speichert;
**dadurch gekennzeichnet, dass**
- der Satz von Garparametern, die einem Parameterwert (**FTY**) in Bezug auf die Nahrungsmittelart entsprechen, Folgendes umfasst:

- einen Basisgarzeit-Parameter (**BCT**), dessen Wert eine Basisgarzeit bestimmt, die zum Garen des Nahrungsmittels, das vom Nahrungsmittel-Parameterwert (**FTY**) identifiziert wurde, erforderlich ist;

- einen durchschnittlichen Leistungspegel-Parameter (**APL**), dessen Wert den durchschnittlichen Leistungspegel der von den Mikrowellenstrahlungsgeneratoren (**148**) erzeugten Mikrowellenstrahlung während des Garens des Nahrungsmittels, das vom Nahrungsmittel-Parameterwert (**FTY**) identifiziert wurde, bestimmt, und

- einen internen Grilltemperatur-Parameter (**IBT**), dessen Wert die Temperatur des Garraums (**135**) bestimmt, die zum Garen des Nahrungsmittels, das vom Nahrungsmittel-Parameterwert (**FTY**) identifiziert wurde, erforderlich ist.

2. Grill (**100**) nach Anspruch 1, wobei das mindestens eine Heizelement (**145**) dazu ausgelegt ist, Hitze aus einem festen Brennstoff, einem gasförmigen Brennstoff oder einem elektrischen Strom zu erzeugen.

3. Grill (**100**) nach einem der vorhergehenden Ansprüche, wobei die Grillsteuereinheit (**200**) dazu ausgelegt ist, einen Arbeitszyklus des mindestens einen Mikrowellenstrahlungsgenerators (**148**) in Abhängigkeit von den Nahrungsmittel-Parametern (**FTY, TFW, CLV**), die von einem Benutzer bereitgestellt werden, zu steuern.

4. Grill (**100**) nach Anspruch 3, wobei die Grillsteuereinheit (**200**) dazu ausgelegt ist:

- Garparameter (**BCT, UCT, APL, SPL, IBT, RCL, MCL, WCL, TCT**) auf Basis der von einem Benutzer des Grills (**100**) bereitgestellten Nahrungsmittel-Parameter (**FTY, TFW, CLV**) einzustellen, und
- den mindestens einen Mikrowellenstrahlungsgenerator (**148**) auf Basis der Garparameter anzutreiben.

5. Grill (**100**) nach Anspruch 4, wobei die Grillsteuereinheit (**200**) dazu ausgelegt ist, auch das Heizelement (**145**) auf Basis der Garparameter anzutreiben.

6. Grill (**100**) nach einem der vorhergehenden Ansprüche, wobei der Satz von Garparametern, die einem Parameterwert (**FTY**) in Bezug auf die Nahrungsmittelart entsprechen, ferner Folgendes umfasst:

- einen einheitlichen Garzeit-Parameter (**UCT**), dessen Wert eine zusätzliche Garzeit bestimmt, die zu der Basisgarzeit hinzuaddiert werden soll, auf Basis des Gewichts des zu garenden Nahrungsmittels.

7. Grill (**100**) nach einem der vorhergehenden Ansprüche, wobei der Satz von Garparametern, die einem Parameterwert (**FTY**) in Bezug auf die Nahrungsmittelart entsprechen, ferner einen Anfangsleistungspegel-Parameter (**SPL**) umfasst, dessen Wert den Leistungspegel der von den Mikrowellenstrahlungsgeneratoren (**148**) erzeugten Mikrowellenstrahlung zu Beginn des Garvorgangs des Nahrungsmittels, das vom Nahrungsmittel-Parameterwert (**FTY**) identifiziert wurde, bestimmt.

8. Grill (**100**) nach einem der Ansprüche 1 bis 6, wobei die Nahrungsmittel-Parameter ferner einen Gesamtnahrungsmittelgewicht-Parameter (**TFW**) umfassen, dessen Wert dem Gesamtgewicht des zu garenden Nahrungsmittels entspricht, wobei die Grillsteuereinheit (**200**) dazu ausgelegt ist:

- einen Gesamtgarzeit-Parameter (**TCT**) auf Basis des Basisgarzeit-Parameters (**BCT**), des einheitlichen Garzeit-Parameters (**UCT**) und des Gesamtnahrungsmittelgewicht-Parameters (**TFW**) zu berechnen;
- die Heizelemente (**145**) und die zusätzlichen Heizelemente (**146**) für eine Zeitspanne, die dem Wert des Gesamtgarzeit-Parameters (**TCT**) entspricht, zu aktivieren.

9. Grill (**100**) nach Anspruch 8, wobei die Grillsteuereinheit (**200**) dazu ausgelegt ist, den Gesamtgarzeit-Parameter (**TCT**) durch Multiplikation des Werts des einheitlichen Garzeit-Parameters (**UCT**) mit dem Wert des Gesamtnahrungsmittelgewicht-Parameters (**TFW**) und durch anschließendes Hinzuaddieren des Basisgarzeit-Parameters (**BCT**) zum Resultat der Multiplikation zu berechnen.

10. Grill (**100**) nach einem der vorhergehenden Ansprüche, wobei die Grillsteuereinheit (**200**) ferner dazu ausgelegt ist:

- das mindestens eine Heizelement (**145**) anzutreiben, um die Temperatur im Garraum (**135**) auf einen Wert zu bringen, der dem Wert des internen Grilltemperatur-Parameters (**IBT**) entspricht, und
- den Leistungspegel der von den Mikrowellenstrahlungsgeneratoren (**148**) erzeugten Mikrowellenstrahlung auf Basis des durchschnittlichen Leistungspegel-Parameters (**APL**) und des Anfangsleistungspegel-Parameters (**SPL**) einzustellen.

**11.** Grill **(100)** nach einem der vorhergehenden Ansprüche, ferner umfassend ein Grillgehäuse **(115)**, wobei das Grillgehäuse **(115)** ein unteres Grillgehäuse **(125)** und eine Grillhaube **(120)**, die scharnierförmig mit dem unteren Grillgehäuse **(125)** verbunden ist, umfasst, wobei der Garraum **(135)** von Seitenwänden **(135)** des unteren Grillgehäuses **(125)** und von der Grillhaube **(120)**, wenn diese sich in einer geschlossenen Stellung befindet, begrenzt wird, wobei die Öffnungen **(150)** auf mindestens einer Seitenwand **(135)** vorgesehen sind.

**Revendications**

**1.** Grill de barbecue (100), comprenant:

- un compartiment de cuisson (135);
- une surface de cuisson (140) située dans le compartiment de cuisson;
- au moins un élément chauffant (145) situé en dessous de la surface de cuisson et adapté de manière à être activé pour fournir de la chaleur dans le but de cuire un aliment placé sur la surface de cuisson,

dans lequel

- le grill de barbecue comprend en outre au moins un élément chauffant supplémentaire (146) adapté pour générer un rayonnement électromagnétique dans le spectre des micro-ondes et amener ledit rayonnement électromagnétique dans le compartiment de cuisson pour investir l'aliment placé sur la surface de cuisson;
- ledit au moins un élément chauffant supplémentaire (146) comprend au moins un générateur de rayonnement de micro-ondes (148) pour générer le rayonnement électromagnétique et au moins un guide d'ondes correspondant (149) qui couple le générateur de rayonnement à une ouverture correspondante (150) prévue sur une surface du compartiment de cuisson (135) afin de guider le rayonnement électromagnétique dans le compartiment de cuisson (135) à travers le guide d'ondes et l'ouverture (150);
- le grill de barbecue (100) comprend en outre une unité de commande de barbecue (200) configurée de manière à amener ledit au moins un générateur de rayonnement de micro-ondes (148) en fonction de paramètres d'aliment (FTY, TFW, CLV) prévus par un utilisateur, lesdits paramètres d'aliment comprenant un paramètre de type d'aliment (FTY) dont la valeur identifie le type d'aliment à cuire, l'unité de commande de barbecue (200) comprenant en outre un module de base de données (220) qui stocke pour chaque valeur de paramètre de type d'aliment (FTY) un ensemble correspondant de paramètres de cuisson;
**caractérisé en ce que**
- ledit ensemble de paramètres de cuisson correspondant à une valeur de paramètre de type d'aliment (FTY) comprend:

- un paramètre de temps de cuisson de base (BCT), dont la valeur détermine un temps de cuisson de base requis pour cuire l'aliment identifié par la valeur de paramètre d'aliment (FTY);
- un paramètre de niveau de puissance moyen (APL), dont la valeur détermine le niveau de puissance moyen du rayonnement de micro-ondes généré par le générateur de rayonnement de micro-ondes (148) pendant la cuisson de l'aliment identifié par la valeur de paramètre d'aliment (FTY), et
- un paramètre de température de grill de barbecue intérieure (IBT) dont la valeur détermine la température du compartiment de cuisson (135) requise pour cuire l'aliment identifié par la valeur de paramètre d'aliment (FTY).

**2.** Grill de barbecue (100) selon la revendication 1, dans lequel ledit au moins un élément chauffant (145) est adapté pour générer de la chaleur à partir d'un combustible solide, d'un combustible gazeux ou d'un courant électrique.

**3.** Grill de barbecue (100) selon l'une quelconque des revendications précédentes, dans lequel l'unité de commande de barbecue (200) est configurée de manière à commander un cycle de fonctionnement dudit au moins un générateur de rayonnement de micro-ondes (148) en fonction des paramètres d'aliment (FTY, TFW, CLV) prévus par un utilisateur.

**4.** Grill de barbecue (100) selon la revendication 3, dans lequel l'unité de commande de barbecue (200) est configurée de manière à:

- régler des paramètres de cuisson (BCT, UCT, APL, SPL, IBT, RCL, MCL, WCL, TCT) sur la base des paramètres d'aliment (FTY, TFW, CLV) prévus par un utilisateur du grill de barbecue (100), et

- activer ledit au moins un générateur de rayonnement de micro-ondes (148) sur la base des paramètres de cuisson.

**5.** Grill de barbecue (100) selon la revendication 4, dans lequel l'unité de commande de barbecue (200) est adaptée pour activer également l'élément chauffant (145) sur la base des paramètres de cuisson.

**6.** Grill de barbecue (100) selon l'une quelconque des revendications précédentes, dans lequel ledit ensemble de paramètres de cuisson correspondant à une valeur de paramètre de type d'aliment (FTY) comprend en outre:

- un paramètre de temps de cuisson unitaire (UCT), dont la valeur détermine un temps de cuisson supplémentaire à ajouter au temps de cuisson de base sur la base du poids de l'aliment à cuire.

**7.** Grill de barbecue (100) selon l'une quelconque des revendications précédentes, dans lequel ledit ensemble de paramètres de cuisson correspondant à une valeur de paramètre de type d'aliment (FTY) comprend en outre un paramètre de niveau de puissance de démarrage (SPL), dont la valeur détermine le niveau de puissance du rayonnement de micro-ondes généré par le générateur de rayonnement de micro-ondes (148) au début de la cuisson de l'aliment identifié par la valeur de paramètre d'aliment (FTY).

**8.** Grill de barbecue (100) selon l'une quelconque des revendications 1 à 6, dans lequel lesdits paramètres d'aliment comprennent en outre un paramètre de poids d'aliment total (TFW), dont la valeur correspond au poids total de l'aliment à cuire, l'unité de commande de barbecue (200) étant configurée de manière à:

- calculer un paramètre de temps de cuisson total (TCT) sur la base du paramètre de temps de cuisson de base (BCT), du paramètre de temps de cuisson unitaire (UCT) et du paramètre de poids d'aliment total (TFW);
- activer les éléments chauffants (145) ainsi que les éléments chauffants supplémentaires (146) pendant une période de temps qui correspond à la valeur de paramètre de temps de cuisson total (TCT).

**9.** Grill de barbecue (100) selon la revendication 8, dans lequel l'unité de commande de barbecue (200) est configurée de manière à calculer le paramètre de temps de cuisson total (TCT) en multipliant la valeur de paramètre de temps de cuisson unitaire (UCT) par la valeur de paramètre de poids d'aliment total (TFW), et an ajoutant ensuite le paramètre de temps de cuisson de base (BCT) au résultat de ladite multiplication.

**10.** Grill de barbecue (100) selon l'une quelconque des revendications précédentes, dans lequel l'unité de commande de barbecue (200) est en outre configurée de manière à:

- activer ledit au moins un élément chauffant (145) de manière à amener la température du compartiment de cuisson (135) à une valeur qui correspond à la valeur de paramètre de température de grill de barbecue intérieure (IBT), et
- régler le niveau de puissance du rayonnement de micro-ondes généré par le générateur de rayonnement de micro-ondes (148) sur la base du paramètre de niveau de puissance moyen (APL) et du paramètre de niveau de puissance de démarrage (SPL).

**11.** Grill de barbecue (100) selon l'une quelconque des revendications précédentes, comprenant en outre une enceinte de grill (115), l'enceinte de grill (115) comprenant une enceinte de grill inférieure (125) et un capot de grill (120) connecté de façon articulée à l'enceinte de grill inférieure (125), le compartiment de cuisson (135) étant délimité par des parois latérales (135) de l'enceinte de grill inférieure (125) et par le capot de grill (120) lorsqu'il se trouve dans une position fermée, dans lequel les ouvertures (150) sont prévues sur au moins une paroi latérale (135).

## FIG.1

FIG.2

duty cycle %

SPL ≡ APL

TCT

time

<u>FIG.3A</u>

duty cycle %

SPL

APL

TCT

time

<u>FIG.3B</u>

duty cycle %

APL

SPL

TCT

time

<u>FIG.3C</u>

15

**EP 2 820 985 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2329751 A